# EUROPÄISCHE PATENTSCHRIFT

(11) **EP 2 475 968 B1**
(45) Veröffentlichungstag und Bekanntmachung des Hinweises auf die Patenterteilung: **31.01.2018**
(21) Anmeldenummer: 10747200.3
(22) Anmeldetag: 25.08.2010
(51) Int. Cl.: G01D 21/00, H04Q 9/00

(54) **SENSORNETZWERK UND VERFAHREN ZU DESSEN BETRIEB**
SENSOR NETWORK AND METHOD FOR THE OPERATION THEREOF
RÉSEAU DE DÉTECTEURS ET PROCÉDÉ POUR FAIRE FONCTIONNER CE DERNIER

(30) Priorität: 07.09.2009 DE 102009040382
(43) Veröffentlichungstag der Anmeldung: 18.07.2012
(73) Patentinhaber: Schaeffler Technologies AG & Co. KG, 91074 Herzogenaurach (DE)
(72) Erfinder: BISTER, Oliver, 52477 Alsdorf (DE); GITZEN, Matthias, 52072 Aachen (DE); HAMERS, Luc, 52064 Aachen (DE); LANGER, Götz, 52159 Roetgen (DE); NIEWÖHNER, Andreas, 52074 Aachen (DE); SCHÜLLER, Diethelm, 52072 Aachen (DE); VON SYDOW, Thorsten, 52070 Aachen (DE)
(86) Internationale Anmeldenummer: PCT/EP2010/062391
(87) Internationale Veröffentlichungsnummer: WO 2011/026765

(56) Entgegenhaltungen:
- WO-A1-2005/071364
- WO-A1-2007/002769
- DE-A1-102005 023 485
- US-A1- 2003 012 168
- US-B1- 6 571 132
- Moetiv Corporation: "Low Power Wireless Sensor Module", , 13. November 2006 (2006-11-13), XP000002658690, Gefunden im Internet: URL:http://www.bandwavetech.com/download/t mote-sky-datasheet.pdf [gefunden am 2011-09-09]

## Beschreibung

### Gebiet der Erfindung

Die vorliegende Erfindung betrifft ein Sensornetzwerk mit mehreren Sensoren sowie ein Verfahren zum Betrieb des Sensornetzwerkes.

Die DE 103 26 249 A1 zeigt eine Messeinrichtung mit einer Steuereinrichtung zum Steuern von Funktionen der Messeinrichtung und/oder Verarbeiten von Messdaten. Die Messeinrichtung weist eine Kommunikationsschnittstelle auf, um mit einer gleichartigen Messeinrichtung kommunizieren zu können.

Die DE 101 60 395 A1 zeigt eine Datenübertragungsanordnung für das selektive Übertragen von Daten von einer Vielzahl von Messstrecken auf wenigstens ein Abfragefunkgerät. Die von einem oder mehreren Sendern erzeugten Daten werden kontinuierlich per Funk über einen Empfänger und ein Sendefunkgerät und/oder über eine integrierte Empfangs-Sendeeinheit an das Abfragefunkgerät weitergeleitet.

Aus der DE 195 19 164 B4 ist eine dezentralisierte Vorrichtung zum Steuern von Operationen zur Erfassung, zur Übertragung und zur Kontrolle durch eine in einer Untersuchungszone installierte seismische Ausrüstung bekannt. Von einer Vielzahl an lokalen Einheiten werden seismische Daten an eine lokale zentrale Station übertragen. Von einer oder mehreren der lokalen zentralen Stationen werden die seismischen Daten zu einer zentralen Station übertragen.

Die DE 100 64 420 B4 zeigt eine Vorrichtung zur dezentralen Erfassung und Auswertung von physikalischen Ereignissen. Ein oder mehrere Messelemente sind an ein internes Bussystem angeschlossen und über dieses programmierbar. Die auf dem internen Bussystem übertragenen Daten sind über mindestens eine ein- oder mehrteilige Auswerteinheit nach außen abgebbar. Nachteilig an dieser Lösung ist der erhöhte Aufwand für die Auswerteinheit, ohne die eine Übertragung der Messdaten des einen oder der mehreren Messelemente nach außen nicht möglich ist. Die Verbindung des oder der Messelemente zum internen Bussystem erlaubt eine Kommunikation innerhalb der Vorrichtung, wodurch Messdaten und Daten zur Programmierung der Messelemente zwischen den Messelementen und der Auswerteinheit austauschbar sind.

Andere Beispiele von Sensoren bzw. Sensornetzwerken sind aus folgenden Dokumenten bekannt: XP002658690 (Moetiv Corporation: "Low Power Wireless Sensor Module", 13. November 2006), US 2003/012168 A1, WO 2007/002769 A1 und WO 2005/071364 A1. Die Aufgabe der Erfindung besteht ausgehend vom Stand der Technik darin, Sensoren eines Sensornetzwerkes aufwandsarm untereinander und nach außen verknüpfen zu können.

Die Aufgabe wird gelöst durch ein Sensornetzwerk gemäß dem beigefügten Anspruch 1. Die Erfindung sieht weiterhin ein Verfahren zum Betrieb eines Sensornetzwerkes gemäß dem beigefügten nebengeordneten Anspruch 5 vor. Ein Sensor dient der Messung mindestens einer Messgröße, beispielsweise einer physikalischen oder chemischen Eigenschaft, wie z. B. Druck, Drehzahl, Kraft, Beschleunigung, Temperatur. Die erfindungsgemäße Funktion ist nicht auf eine bestimmte Art von Messgrößen eingeschränkt. Der Sensor umfasst zunächst mindestens einen Messgrößenaufnehmer, um die Messgröße in ein elektrisches Signal zu wandeln. Mindestens ein Wandler dient der Wandlung des elektrischen Signals in Messdaten. Der Wandler kann beispielsweise durch einen A/D-Wandler gebildet sein, welcher die digitalen Messdaten zur Verfügung stellt. Der erfindungsgemäße Sensor besitzt eine erste Kommunikationsschnittstelle zur Übertragung der Messdaten und weiterer Daten gemäß einem ersten Protokoll. Hierbei kann es sich beispielsweise um einen proprietären Bus-Anschluss, eine serielle Schnittstelle nach RS422 oder um eine W-LAN-Schnittstelle handeln. Der erfindungsgemäße Sensor umfasst weiterhin eine zweite Kommunikationsschnittstelle zur Übertragung der Messdaten und weiterer Daten gemäß einem zweiten Protokoll. Auch bei der zweiten Kommunikationsschnittstelle kann es sich um eine beliebige Schnittstelle, wie beispielsweise einen Twisted-Pair-Netzwerkanschluss oder um eine GSM-Schnittstelle handeln. Jedenfalls stehen an dem erfindungsgemäßen Sensor zwei unterschiedliche Kommunikationsschnittstellen zur Verfügung. Der Sensor umfasst weiterhin eine Datenaustauscheinheit zum Austausch von Daten zwischen dem Wandler, der ersten Kommunikationsschnittstelle und der zweiten Kommunikationsschnittstelle. Bei den auszutauschenden Daten handelt es sich primär um Messdaten, beispielsweise um Messdaten, welche vom Wandler ausgegeben wurden, und um Messdaten, die von einem anderen Sensor an die erste Kommunikationsschnittstelle übertragen wurden. Weiterhin können die Daten beispielsweise Steuerungsdaten zur Steuerung des Wandlers oder Prozessparameter umfassen.

Der Sensor kann universell innerhalb eines Sensornetzwerkes oder in Alleinstellung verwendet werden. Die erste Kommunikationsschnittstelle erlaubt die Datenübertragung zwischen mehreren Sensoren. Die zweite Kommunikationsschnittstelle erlaubt die Übertragung zu einer externen Einrichtung. Dabei können sowohl die Messdaten, welche von dem an die externe Einrichtung angeschlossenen Sensor gemessen wurden, als auch solche Messdaten, die von weiteren Sensoren über die erste Kommunikationsschnittstelle an diesen Sensor übertragen wurden, an die externe Einrichtung übertragen werden. Es ist keine Einrichtung mit einer Gateway-Funktion erforderlich, um die Messdaten des einen oder der mehreren erfindungsgemäßen Sensoren an eine externe Einrichtung zu übertragen. Zudem ist es möglich, weitere Daten, wie beispielsweise Steuerungsdaten von der externen Einrichtung über die zweite Kommunikationsschnittstelle an den Sensor zu übertragen, wobei diese Steuerungsdaten über die erste Kommunikationsschnittstelle an weitere Sensoren übertragen werden können.

Besonders bevorzugt wird der erfindungsgemäße Sensor als Schwingungssensor ausgeführt, um in einem System zur Zustands- und Prozessüberwachung genutzt werden zu können. Mechanische Schwingungen des zu überwachenden Systems stellen hierbei die Messgröße dar.

Die erste Kommunikationsschnittstelle und die zweite Kommunikationsschnittstelle sind entsprechend den Anforderungen auszuwählen. Die erste Kommunikationsschnittstelle ist vorzugsweise dafür geeignet, um Messdaten und weitere Daten von einem Sensor zu einem weiteren Sensor zu übertragen. Die zweite Kommunikationsschnittstelle ist vorzugsweise dafür geeignet, die Messdaten und weitere Daten von einem erfindungsgemäßen Sensor zu einer externen Einrichtung, beispielsweise zu einer Leitwarte zu übertragen. Dabei können die erste Kommunikationsschnittstelle und die zweite Kommunikationsschnittstelle auf unterschiedlichen Medien, wie beispielsweise einer Kabelverbindung, einer Lichtwellenleiter-Verbindung oder einer Funkverbindung basieren.

Bei einer bevorzugten Ausführungsform des Sensors umfasst die Datenaustauscheinheit einen programmierbaren Prozessor. Mit Hilfe des programmierbaren Prozessors ist es beispielsweise möglich, den Datenaustausch zwischen dem Wandler, der ersten Kommunikationsschnittstelle und der zweiten Kommunikationsschnittstelle an sich verändernde Anforderungen anzupassen. Weiterhin können durch den programmierbaren Prozessor eine Aufbereitung und/oder Auswertung der Messdaten vorgenommen werden.
Der Prozessor ist bevorzugt über die erste Kommunikationsschnittstelle und/oder die zweite Kommunikationsschnittstelle programmierbar. Dadurch ist es beispielsweise möglich, dass der Prozessor von der Leitwarte aus programmierbar ist. Insofern der Prozessor eines erfindungsgemäßen Sensors über die erste Kommunikationsschnittstelle programmierbar ist, so kann dieser auch programmiert werden, wenn er nicht unmittelbar an die Leitwarte über die zweite Kommunikationsschnittstelle angeschlossen ist.

Bei einer weiteren bevorzugten Ausführungsform des Sensors ist der Wandler über die erste Kommunikationsschnittstelle und/oder über die zweite Kommunikationsschnittstelle steuerbar. Hierdurch ist es möglich, beispielsweise die Abtastfrequenz des A/D-Wandlers an eine sich verändernde Messgröße anzupassen, ohne hierfür vor Ort Einstellungen am Wandler vornehmen zu müssen.

Ein erfindungsgemäßes Sensornetzwerk umfasst mehrere Sensoren, welche über ihre ersten Kommunikationsschnittstellen miteinander verbunden sind. Das erfindungsgemäße Sensornetzwerk umfasst weiterhin eine Leitwartenschnittstelle, welche durch die zweite Kommunikationsschnittstelle eines der Sensoren gebildet ist. Innerhalb des Sensornetzwerkes können über die ersten Kommunikationsschnittstellen der Sensoren Messdaten und weitere Daten übertragen werden. Um die Messdaten nach außerhalb des Sensornetzwerkes zu übertragen, werden die Messdaten über die Leitwartenschnittstelle übertragen. Der die Leitwartenschnittstelle aufweisende Sensor gewährleistet die Kommunikation zwischen dem Sensornetzwerk und einer externen Vorrichtung, beispielsweise einer Leitwarte. Eine zusätzliche Vorrichtung mit einer Gateway-Funktion ist nicht erforderlich, um die Datenübertragung zwischen dem Sensornetzwerk und der Leitwarte zu ermöglichen.

Ein besonderer Vorteil des erfindungsgemäßen Sensornetzwerkes besteht darin, dass dieses aufwandsarm modifiziert werden kann, beispielsweise indem weitere Sensoren an das Sensornetzwerk nachträglich angeschlossen werden. Die erste Kommunikationsschnittstelle der nachträglich anzuschließenden Sensoren gewährleistet, dass die Messdaten dieser Sensoren in das Netzwerk übertragen werden können, um anschließend über die Leitwartenschnittstelle an eine externe Vorrichtung zu übertragen werden. Ein weiterer Vorteil des erfindungsgemäßen Sensornetzwerkes besteht darin, dass weitere Daten, wie beispielsweise Steuerungsdaten oder Prozessdaten innerhalb des Sensornetzwerkes und von bzw. nach außerhalb über die Leitwartenschnittstelle übertragen werden können. Dadurch ist eine Anpassung der Sensoren an veränderte Messanforderungen über die externe Vorrichtung möglich, ohne dass es hierfür einen Zugriff vor Ort auf einzelne Sensoren bedarf. Dies ist insbesondere von Vorteil, wenn die Installationsorte der Sensoren schwer zugänglich sind.

Das erfindungsgemäße Sensornetzwerk eignet sich für unterschiedlichste Messaufgaben in Natur und Technik, beispielsweise zur Erfassung seismischer Daten oder zur Überwachung komplexer technischer Vorrichtungen. Auch ist es möglich, einzelne technische Komponenten, wie beispielsweise Pumpen oder Ventilatoren mit jeweils einem einzigen erfindungsgemäßen Sensor auszustatten, wobei ein erfindungsgemäßes Sensornetzwerk beim Anwender dadurch geschaffen wird, dass der Anwender mehrere dieser technischen Komponenten zusammenschaltet.

Das erfindungsgemäße Sensornetzwerk kann zur Überwachung komplexer natürlicher oder technischer Vorgänge ausgeführt werden. Hierbei können die Sensoren des Netzwerkes für unterschiedlichste Messgrößen vorgesehen sein.

Das erfindungsgemäße Verfahren dient zum Betrieb eines erfindungsgemäßen Sensornetzwerkes. Das Verfahren umfasst zunächst einen Schritt, bei welchem Messdaten eines ersten der Sensoren über dessen erste Kommunikationsschnittstelle zu dem die Leitwartenschnittstelle aufweisenden Sensor übertragen werden. In einem weiteren Schritt werden die Messdaten des ersten Sensors und Messdaten des die Leitwartenschnittstelle aufweisenden Sensors über die Leitwartenschnittstelle übertragen. Hierbei kann es sich um sämtliche Messdaten dieser Sensoren oder um ausgewählte Messdaten dieser Sensoren handeln. Bevorzugt werden die Messdaten des ersten Sensors und des die Leitwartenschnittstelle aufweisenden Sensors aufbereitet und/oder ausgewertet, bevor sie über die Leitwartenschnittstelle übertragen werden. Umfasst das zu betreibende Sensornetzwerk neben dem ersten Sensor und dem die Leitwartenschnittstelle aufweisenden Sensor weitere Sensoren, so sind bevorzugt auch Messdaten der weiteren Sensoren über deren ersten Kommunikationsschnittstellen zu dem die Leitwartenschnittstelle aufweisenden Sensor zu übertragen. Dies erfolgt bevorzugt derart, dass die Messdaten eines zweiten der Sensoren über dessen erste Kommunikationsschnittstelle zum ersten Sensor übertragen werden. Weiterhin werden die Messdaten des zweiten Sensors über die erste Kommunikationsschnittstelle des ersten Sensors zu dem die Leitwartenschnittstelle aufweisenden Sensor übertragen. Die Messdaten des zweiten Sensors werden ebenso wie die Messdaten des ersten Sensors und die Messdaten des die Leitwartenschnittstelle aufweisenden Sensors über die Leitwartenschnittstelle übertragen.

Bei einer bevorzugten Ausführungsform des erfindungsgemäßen Verfahrens werden weiterhin Steuerungsdaten über die Leitwartenschnittstelle übertragen. Die Steuerungsdaten werden durch den die Leitwartenschnittstelle aufweisenden Sensor über dessen erste Kommunikationsschnittstelle zum ersten Sensor übertragen, wo sie zur Steuerung des Wandlers des ersten Sensors verwendet werden. Mit Hilfe dieser Verfahrensschritte kann der Wandler des ersten Sensors durch Steuerungsdaten, die von außen über die Leitwartenschnittstelle in das Sensornetzwerk übertragen werden, an sich verändernde Messanforderungen angepasst werden. Selbstverständlich können auch Steuerungsdaten in dem die Leitwartenschnittstelle aufweisenden Sensor und in auch weiteren Sensoren für die Steuerung der dortigen Wandler verwendet werden.

Mit Bezug auf die Zeichnung werden nachfolgend ein Messsystem gemäß dem Stand der Technik sowie ein Messsystem mit einem erfindungsgemäßen Sensornetzwerk beschrieben. Es zeigen:
- Fig. 1:: ein Blockschaltbild eines Messsystems mit einer bevorzugten Ausführungsform eines erfindungsgemäßen Sensornetzwerkes, und
- Fig. 2:: ein Blockschaltbild eines Messsystems gemäß dem Stand der Technik.

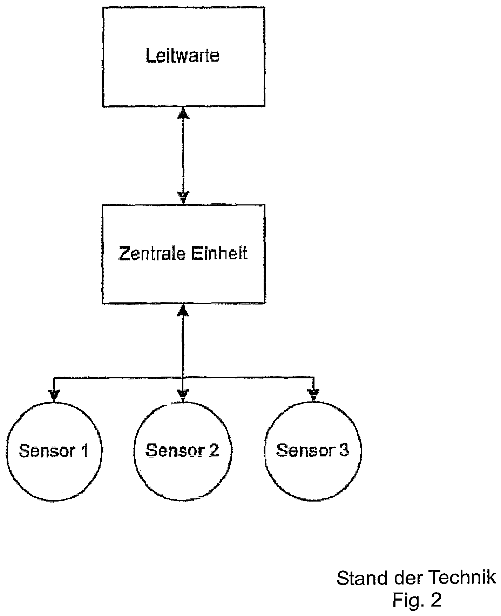

Fig. 2 zeigt ein Blockschaltbild eines Messsystems gemäß dem Stand der Technik. Das Messsystem umfasst zunächst drei Sensoren, mit denen jeweils eine Messgröße gemessen wird. Die drei Sensoren weisen eine Schnittstelle zur Ausgabe der Messdaten auf, über welche sie mit einer zentralen Einheit verbunden sind. Die Verbindungen zwischen der zentralen Einheit und den drei Sensoren können beispielsweise eine linien- oder eine baumartige Struktur aufweisen. Die zentrale Einheit ermöglicht es, dass die Messdaten der drei Sensoren zu einer Leitwarte übertragen werden können. Folglich kommt der zentralen Einheit eine Gateway-Funktion zu. Es erfolgt eine Wandlung zwischen einem Protokoll, welches auf den Schnittstellen der Sensoren verwendet wird, und einem Protokoll, welches auf der Schnittstelle der Leitwarte verwendet wird. In vielen Fällen erfolgt gleichzeitig eine Wandlung des Mediums. Die zentrale Einheit ist bereits dann erforderlich, wenn nur einer der Sensoren verwendet wird.

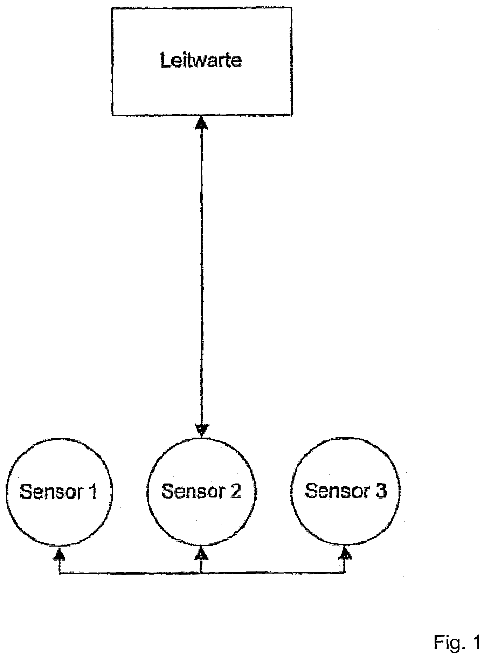

Fig. 1 zeigt ein Messsystem mit einer bevorzugten Ausführungsform eines erfindungsgemäßen Sensornetzwerkes. Das Sensornetzwerk besteht in dem gezeigten Beispiel aus drei erfindungsgemäßen Sensoren. Die drei Sensoren weisen zum einen eine erste Kommunikationsschnittstelle auf, über welche sie untereinander verbunden sind. Es erfolgt eine Übertragung von Messdaten des Sensors 1 und des Sensors 3 zum Sensor 2. Weiterhin werden zwischen den drei Sensoren Steuerungsdaten zur Steuerung der Sensoren ausgetauscht. Die drei Sensoren weisen jeweils weiterhin eine zweite Kommunikationsschnittstelle auf, die nur bei Sensor 2 dargestellt ist. Die zweite Kommunikationsschnittstelle des Sensors 2 bildet eine Leitwartenschnittstelle, über welche der Sensor 2 mit einer Leitwarte verbunden ist. Im Gegensatz zu dem in Fig. 2 gezeigten Messsystem gemäß dem Stand der Technik ist keine zentrale Einheit erforderlich, um die Messdaten der drei Sensoren zu sammeln und gemäß dem von der Schnittstelle der Leitwarte verwendeten Protokoll zu wandeln. Von der Leitwarte aus können Steuerungsdaten zur Steuerung der drei Sensoren an den Sensor 2 gesendet werden, welche über die erste Kommunikationsschnittstelle des Sensors 2 an den Sensor 1 und an den Sensor 3 weitergeleitet werden. Die Datenübertragung auf der ersten Kommunikationsschnittstelle der Sensoren und auf der zweiten Kommunikationsschnittstelle der Sensoren kann im einfachsten Fall unidirektional ausgeführt werden. In diesem Fall senden der Sensor 1 und der Sensor 3 die Messdaten zum Sensor 2, während der Sensor 2 die Messdaten sämtlicher Sensoren zur Leitwarte sendet. Bevorzugt wird die Datenübertragung auf der ersten Kommunikationsschnittstelle und auf der zweiten Kommunikationsschnittstelle der Sensoren bidirektional ausgeführt, wodurch die Datenübertragung beispielsweise auch abgesichert werden kann.

## Patentansprüche

1. Sensornetzwerk mit Sensoren zur Messung mindestens einer Messgröße,
wobei jeder dieser Sensoren einen Messgrößenaufnehmer zur Wandlung der Messgröße in ein elektrisches Signal,
einen
Wandler zur Wandlung des elektrischen Signals in Messdaten,
eine erste
Kommunikationsschnittstelle zur Übertragung der Messdaten und weiterer Daten gemäß einem ersten Protokoll,
und eine zweite
Kommunikationsschnittstelle zur Übertragung der Messdaten und weiterer Daten gemäß einem zweiten Protokoll und
eine
Datenaustauscheinheit zum Austausch von Daten zwischen dem Wandler, der ersten Kommunikationsschnittstelle und der zweiten Kommunikationsschnittstelle aufweist,
**dadurch gekennzeichnet,**
**dass** die Sensoren über ihre ersten Kommunikationsschnittstellen miteinander verbunden sind und mit einer Leitwartenschnittstelle, die durch die zweite Kommunikationsschnittstelle eines der Sensoren gebildet ist, mit einer Leitwarte verbunden ist und
**dass** die Sensoren zur Messung unterschiedlicher Messgrößen ausgeführt sind.

2. Sensornetzwerk nach Anspruch 1, **dadurch gekennzeichnet, dass** die Kommunikation der ersten Kommunikationsschnittstelle und diejenige der zweiten Kommunikationsschnittstelle auf unterschiedlichen Medien basieren.

3. Sensornetzwerk nach Anspruch 1 oder 2, **dadurch gekennzeichnet, dass** die Datenaustauscheinheit einen programmierbaren Prozessor umfasst.

4. Sensornetzwerk nach Anspruch 3, **dadurch gekennzeichnet, dass** der Prozessor über die erste Kommunikationsschnittstelle und/oder über die zweite Kommunikationsschnittstelle programmierbar ist.

5. Verfahren zum Betrieb eines Sensornetzwerkes nach Anspruch 1, die folgenden Schritte umfassend,
- Übertragen der Messdaten eines ersten der Sensoren über dessen erste Kommunikationsschnittstelle zu dem die Leitwartenschnittstelle aufweisenden Sensor; und
- Übertragen von Messdaten des ersten Sensors und von Messdaten des die Leitwartenschnittstelle aufweisenden Sensors über die Leitwartenschnittstelle.

6. Verfahren nach Anspruch 5, **dadurch gekennzeichnet, dass** es weiterhin die folgenden Schritte umfasst:
- Übertragen der Messdaten eines zweiten der Sensoren über dessen erste Kommunikationsschnittstelle zum ersten Sensor;
- Übertragen der Messdaten des zweiten Sensors über die erste Kommunikationsschnittstelle des ersten Sensors zu dem die Leitwartenschnittstelle aufweisenden Sensor; und
- Übertragen von Messdaten des zweiten Sensors über die Leitwartenschnittstelle.

7. Verfahren nach Anspruch 5 oder 6, **dadurch gekennzeichnet, dass** es weiterhin die folgenden Schritte umfasst:
- Übertragen von Steuerungsdaten über die Leitwartenschnittstelle;
- Übertragen der Steuerungsdaten durch den die Leitwartenschnittstelle aufweisenden Sensor über dessen erste Kommunikationsschnittstelle zum ersten Sensor; und
- Verwenden der Steuerungsdaten im ersten Sensor zur Steuerung von dessen Wandler.

8. Verfahren nach einem der Ansprüche 5 bis 7, **dadurch gekennzeichnet, dass** die Messdaten des ersten Sensors und die Messdaten des die Leitwartenschnittstelle aufweisenden Sensors aufbereitet und/oder ausgewertet werden, bevor sie über die Leitwartenschnittstelle übertragen werden.

## Claims

1. Sensor network having sensors for measuring at least one measurement variable, each of these sensors having
a measurement variable pick-up for converting the measurement variable into an electrical signal,
a converter for converting the electrical signal into measurement data,
a first communication interface for transmitting the measurement data and further data according to a first protocol, and
a second communication interface for transmitting the measurement data and further data according to a second protocol, and
a data interchange unit for interchanging data between the converter, the first communication interface and the second communication interface, **characterized in that**
the sensors are connected to one another via their first communication interfaces, and are connected to a control room using a control room interface which is formed by the second communication interface of one of the sensors, and
**in that** the sensors are designed to measure different measurement variables.

2. Sensor network according to Claim 1, **characterized in that** the communication of the first communication interface and that of the second communication interface are based on different media.

3. Sensor network according to Claim 1 or 2, **characterized in that** the data interchange unit comprises a programmable processor.

4. Sensor network according to Claim 3, **characterized in that** the processor is programmable via the first communication interface and/or via the second communication interface.

5. Method for operating a sensor network according to Claim 1, comprising the following steps
- the measurement data from a first of the sensors are transmitted, via its first communication interface, to the sensor having the control room interface; and
- measurement data from the first sensor and measurement data from the sensor having the control room interface are transmitted via the control room interface.

6. Method according to Claim 5, **characterized in that** it also comprises the following steps:
- the measurement data from a second of the sensors are transmitted, via its first communication interface, to the first sensor;
- the measurement data from the second sensor are transmitted to the sensor having the control room interface via the first communication interface of the first sensor; and
- measurement data from the second sensor are transmitted via the control room interface.

7. Method according to Claim 5 or 6, **characterized in that** it also comprises the following steps:
- control data are transmitted via the control room interface;
- the control data are transmitted by the sensor having the control room interface, via its first communication interface, to the first sensor; and
- the control data are used in the first sensor to control its converter.

8. Method according to one of Claims 5 to 7, **characterized in that** the measurement data from the first sensor and the measurement data from the sensor having the control room interface are preprocessed and/or evaluated before they are transmitted via the control room interface.

## Revendications

1. Réseau de détecteurs comprenant des détecteurs destinés à mesurer au moins une grandeur de mesure,
chacun de ces détecteurs possédant un capteur de grandeur de mesure destiné à convertir la grandeur de mesure en un signal électrique,
un convertisseur destiné à convertir le signal électrique en données de mesure,
une première interface de communication destinée à la transmission des données de mesure et d'autres données conformément à un premier protocole,
et une deuxième interface de communication destinée à la transmission des données de mesure et d'autres données conformément à un deuxième protocole, et
une unité d'échange de données destinée à l'échange de données entre le convertisseur, la première interface de communication et la deuxième interface de communication,
**caractérisé en ce**
**que** les détecteurs sont reliés ensemble par le biais de leurs premières interfaces de communication et sont reliés à un poste central par une interface de poste central, laquelle est formée par la deuxième interface de communication et l'un des détecteurs, et
**que** les détecteurs sont exécutés pour mesurer différentes grandeurs de mesure.

2. Réseau de détecteurs selon la revendication 1, **caractérisé en ce que** la communication de la première interface de communication et celle de la deuxième interface de communication se basent sur des supports différents.

3. Réseau de détecteurs selon la revendication 1 ou 2, **caractérisé en ce que** l'unité d'échange de données comprend un processeur programmable.

4. Réseau de détecteurs selon la revendication 3, **caractérisé en ce que** le processeur est programmable par le biais de la première interface de communication et/ou de la deuxième interface de communication.

5. Procédé pour faire fonctionner un réseau de détecteurs selon la revendication 1, lequel comprend les étapes suivantes :
- transmission des données de mesure d'un premier des détecteurs par le biais de sa première interface de communication au détecteur qui possède l'interface de poste central ; et
- transmission des données de mesure du premier détecteur et des données de mesure du détecteur qui possède l'interface de poste central par le biais de l'interface de poste central.

6. Procédé selon la revendication 5, **caractérisé en ce qu'**il comprend en outre les étapes suivantes :
- transmission des données de mesure d'un deuxième des détecteurs par le biais de sa première interface de communication ;
- transmission des données de mesure du deuxième détecteur par le biais de la première interface de communication du premier détecteur au détecteur qui possède l'interface de poste central ; et
- transmission des données de mesure du deuxième détecteur par le biais de l'interface de poste central.

7. Procédé selon la revendication 5 ou 6, **caractérisé en ce qu'**il comprend en outre les étapes suivantes :
- transmission de données de commande par le biais de l'interface de poste central ;
- transmission des données de commande par le détecteur qui possède l'interface de poste central ; et
- utilisation des données de commande dans le premier détecteur pour commander son convertisseur.

8. Procédé selon l'une des revendications 5 à 7, **caractérisé en ce que** les données de mesure du premier détecteur et les données de mesure du détecteur qui possède l'interface de poste central sont conditionnées et/ou interprétées avant qu'elles soient transmises par le biais de l'interface de poste central.
